Europäisches Patentamt

**European Patent Office**

**Office européen des brevets**

(19)

(11) Publication number: **0 012 498**
A1

(12) **EUROPEAN PATENT APPLICATION**

(21) Application number: **79301921.7**

(22) Date of filing: **18.09.79**

(51) Int. Cl.³: **B 66 B 9/12**

(30) Priority: **19.09.78 GB 3733378**

(43) Date of publication of application: **25.06.80**
Bulletin 80/13

(84) Designated Contracting States: **DE FR GB**

(71) Applicant: **O & K, ORENSTEIN KOPPEL AKTIENGESELLSCHAFT, Postfach 17 01 67, D-4600 Dortmund 1 (DE)**

(72) Inventor: **Weston, Douglas Harold, 24 High Spring Gardens Lane, Keighley West Yorkshire (GB)**

(74) Representative: **Geldard, David Guthrie et al, Urquhart-Dykes & Lord 11th Floor Tower House Merrion Way, Leeds, LS2 8PB (GB)**

(54) **Escalator auxiliary drive.**

(57)    An escalator drive comprises a main driving motor (11) operable, in normal use of the escalator, to drive the step-band (15) of the escalator continuously through reduction gearing (12). An auxiliary motor (21) can be operated to advance the step-band (15) in a series of non-continuous movements when the main motor (11) is inoperative. The auxiliary motor (21) has a power supply which is independent of the main motor power supply.

EP 0 012 498 A1

0012498

- 1 -

ESCALATOR AUXILIARY DRIVE

This invention relates to an auxiliary drive for an escalator.

Heavy-duty versions of such escalators are in use particularly on underground railway stations, and the invention is especially - although not exclusively - applicable to escalators of the heavy-duty public-service type.

The design of heavy-duty public-service type escalators for railway stations in the United Kingdom is governed by the requirements of the Railway Inspectorate. These requirements are fairly stringent, but are increasingly being adopted by other countries. One such requirement is that the escalator must be capable of being brought to a halt, and held there, for use as a stationary staircase. Another requirement is that, where the escalator is the sole means of access, from one floor (or level) to another, it must be possible to inspect the escalator driving gear and transmission, and to service them, by working mainly from underneath the escalator and with a minimum use of overhead tackle which might obstruct the escalator stairway. When a breakdown occurs, or when for any other reason the escalator is temporarily brought to a halt, it is also essential to be able to advance the step-band a little at a time at, say, one-eighth or one-tenth normal driving speed, in order to carry out repairs and to check the repairs before bringing the escalator back into service.

The endless stairway or step-band of any escalator is normally continuously driven by an electric motor. It is traditional for this electrically-powered driving motor, and its transmission, to be situated well beneath the head of the escalator stairway. In the particular case of a public-service underground railway escalator, the motor and transmission gear are quite literally located underground in a "machine room", which is excavated beneath the head of the escalator and to which access is gained through a hatch in the floor leading away from the stairway head. When the step-band is brought to a halt, and the driving motor is de-energised, the step-band can then be advanced a little at a time; but only by an engineer entering the machine room and "hand-winding" the transmission. Conventionally the drive motor is permanently coupled to the transmission, and so the motor shaft is hand-rotated.

To carry out this hand-winding technique, one man has to rotate the transmission down in the machine room; a second man, who can actually observe the step-band of the escalator throughout its length, must stand at the head of the escalator stairway; and a third man must be positioned by the hatch which gives access to the machine room, to take instructions from the man at the head of the escalator stairway and to relay them to the man in the machine room who then hand-winds the transmission by the instructed amount.

Accordingly, at least three men are needed to carry out hand-winding safely; and at least one of them (the man in the machine room) must be a practised engineer.

In addition, the need to excavate and fit out the machine room adds considerably to the initial costs of installing the escalator.

According to the present invention, an escalator drive comprising a main driving motor operable, in normal use of the escalator, to drive the step-band of the escalator continuously through reduction gearing, is characterised by the provision of an auxiliary motor which can be operated to advance the step-band in a series of non-continuous movements when the main motor is inoperative and which has a power supply independent of the main motor power supply.

With such an arrangement, it is no longer necessary for three men to be employed when the step-band is brought to a halt and has to be moved forward a little at a time for repair or other work. The auxiliary motor can be brought into operation when the main motor is inoperative, and can be controlled electrically from a position in which the person operating the controls has a full view of the entire length of the escalator stairway. Thus only one person is needed to advance the step-band, he does not have to gain access to the main transmission and drive motor, and he need not necessarily be a trained engineer.

If the auxiliary motor is drivingly coupled to the step-band by the same reduction gearing through which the main motor drives the step-band, a particularly compact drive and transmission train results: so much so, that the main motor, the auxiliary motor, and the reduction gearing can all be situated within the head truss of the escalator instead of - as traditionally - in a machine room excavated beneath the escalator stairway head. The costs of excavating and fitting out the machine room are thereby saved. Alternatively, where a machine room is nevertheless provided as part of the overall escalator installation, the space in the machine room which would have been occupied by the motors and transmission is then left free to house such equipment as electrical control gear and cabinets and the necessary automatic lubrication equipment for the stairway.

Whichever of these arrangements is adopted, overhaul and repair of the driving motors and transmission can still be effected from underneath the stairway, thus satisfying the requirements of the Railway Inspectorate.

Where the auxiliary motor drives the step-band through the same reduction gearing as the main motor, a clutch means will of course be interposed between the auxiliary motor and the reduction gearing, and the arrangement in general will be such that, when the main motor drives the step-band normally, the clutch means automatically uncouples the auxiliary motor from the drive line; but when the main motor is not being drivingly operated, the clutch means can be actuated to couple the auxiliary motor to the reduction gearing and thus allow the auxiliary motor to drive the step-band.

In a convenient arrangement embodying the invention, the main motor driving shaft protrudes from two opposite ends of the main motor housing; one protruding end of that driving shaft is coupled to the reduction gearing which drives the step-band; and the other protruding end of the main motor driving shaft drives the clutch means to which the auxiliary motor is coupled.

With such an arrangement, the reduction gearing, the main drive motor, and the auxiliary motor can be situated adjacent and alongside one another to give an extremely compact driving and transmission unit which can easily be accommodated within the head truss of the escalator.

The auxiliary motor may for example be permanently coupled to the clutch means by a chain and sprocket drive or by a train of toothed gears.

In the traditional hand-winding method of advancing the step-band during repair work, some form of braking means must be provided to hold the step-band in a stationary position. The escalator transmission will conventionally incorporate a braking means, again to satisfy the Railway Inspector's requirement for the stairway to be held in a stationary position; but this braking means will have to be applied and released successively during the hand-winding operation.

By contrast, in an arrangement in which the auxiliary motor drives the step-band through a coupled drive line or train of gears, the auxiliary motor itself constitutes an effective brake on the step-band throughout the time that the motor is energised; and it is no longer necessary to successively apply and release a separate braking means each time the motor is successively stopped and started.

In any arrangement embodying the invention, the electrical power supply to the auxiliary motor could be controlled by a hand-held portable control box adapted to be detachably plugged into sockets located at the head and/or the foot of the escalator stairway. With such an arrangement, the person controlling the auxiliary drive of the step-band needs only to plug his control box cable into the socket at the head or the foot of the stairway in order to have a full view of the entire length of the step-band whilst still exercising full control over its movement by the auxiliary motor.

This last-mentioned arrangement is particularly advantageous when the drive motors and transmission are located within the head truss of the escalator, because the auxiliary motor is already as close as possible to the head plug-in socket point and the length of power cabling needed from the socket to the motor will therefore then be minimised.

The auxiliary motor may be battery-driven, but this is only one possibility. It may for instance be preferable in some circumstances to power it by a separate auxiliary alternating-current electrical supply, or even to use a tapping from the main motor alternating current supply which is them routed to the auxiliary motor through a separate electrical circuit. These particular considerations will to some extent be influenced by safety and emergency regulations which a specific installation will have to meet.

0012498

- 7 .-

The accompanying drawings show, in sectioned diagrammatic side elevation and by way of example only, one escalator embodying the invention.

Figure 1 shows the region around the head of the escalator in side elevation;

Figure 2 shows the same region in plan;

Figure 3 shows in side elevation the area around the foot of the escalator; and

Figure 3A shows the auxiliary control box and lead.

The escalator shown in the drawing is a heavy-duty escalator, of the kind which would be specified and installed at a main line railway station or an underground railway station. A single-speed alternating-current electrically-powered main drive motor 11 is coupled through a reduction gear box 12 to two coaxially-mounted chain wheels 13, 14, one at either side of the endless escalator step-band 15. In normal operation of the escalator, the main motor 11 drives these chain wheels 13, 14 continuously and moves the step-band 15 either continuously up or continuously down as required.

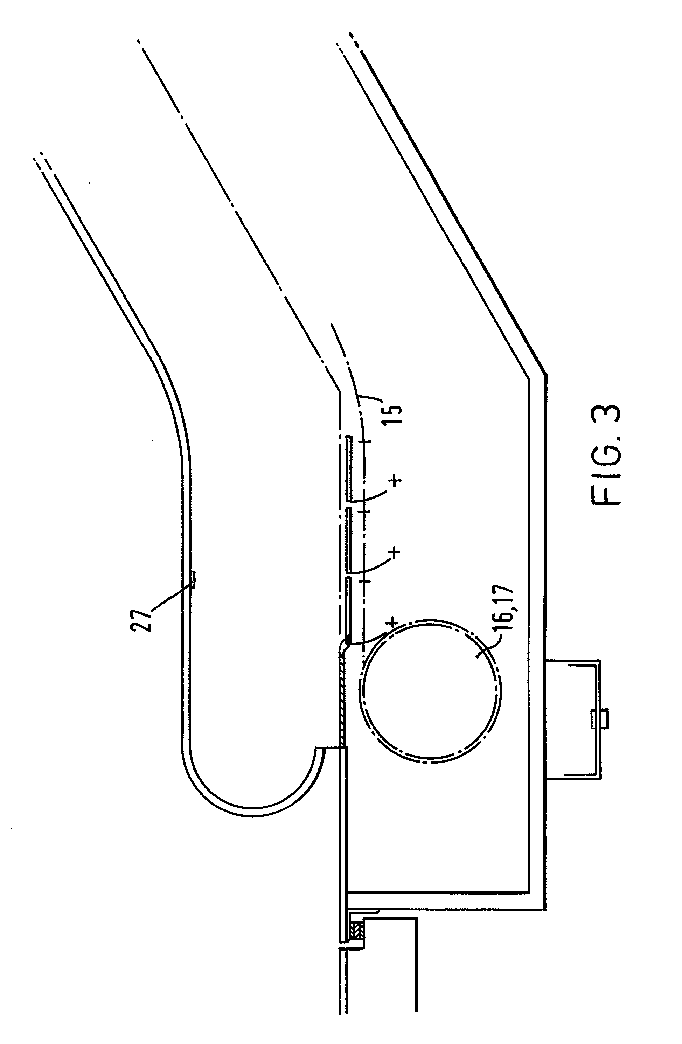

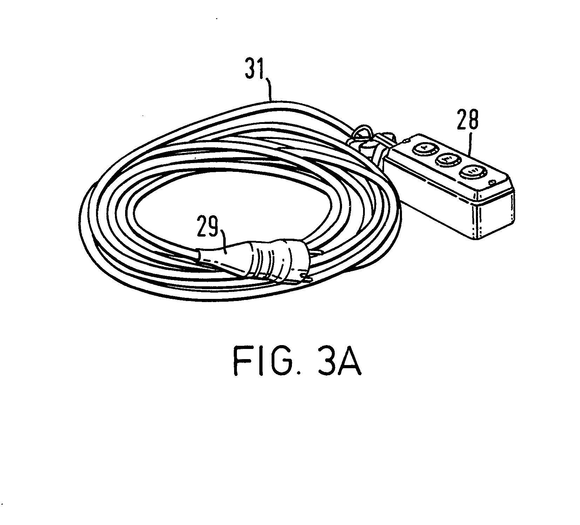

As Figure 3 shows, two further coaxially-mounted chain wheels 16, 17 take the endless step-band drive 15 round the foot of the escalator during this continuous normal operation of the main driving motor 11.

The drive shaft of the main motor 11 protrudes from each end of the main motor housing. The protruding drive shaft end which does not drive the main reduction gearing 12 drives straight into an electro-magnetic clutch 18, and the output of this clutch is connected by a chain-and-sprocket drive 19 to the driving shaft of an auxiliary electrically-powered alternating-current motor 21.

0012498

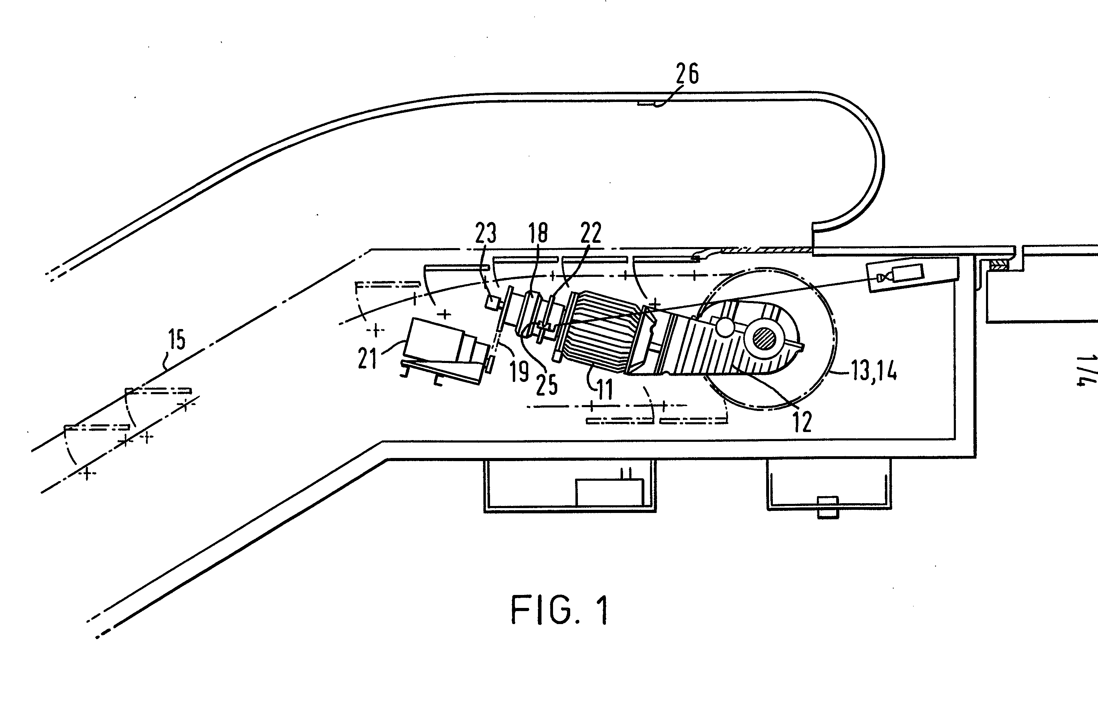

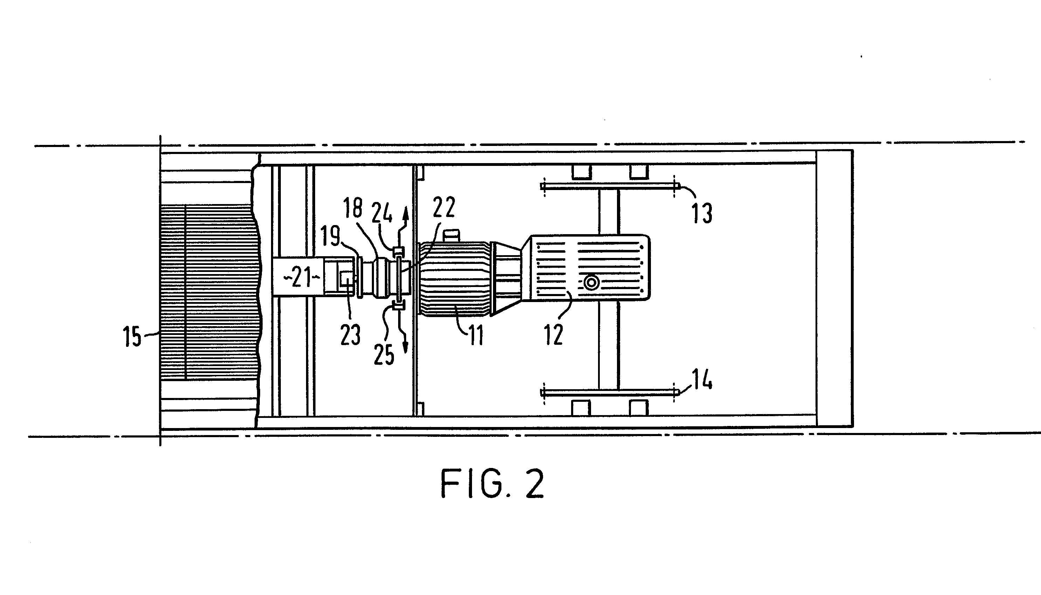

As Figures 1 and 2 show, the auxiliary motor 21 is located adjacent and alongside the main driving motor 11; and the two driving motors 11, 21, the clutch 18 and the transmission gearing 12 are all located within the head truss of the escalator rather than in the traditional position in a machine room excavated beneath the escalator head.

Figures 1 and 2 shows the location of a  disc brake 22 which is fitted to this particular installation.  Because there is only one main motor 11 driving one reduction gearbox 12, a single disc is used and is located at the clutch-driving end 23 of the main motor's driving shaft.  Two separate sets of disc brake calipers 24, 25 act on this disc 22, effectively functioning as two independent braking systems: one brake operates as a brake for use in normal slowing-down circumstances, whilst the second set of calipers operates, a few seconds later, to act as a parking brake when the step-band 15 must be held as a stationary staircase.

If a double-gear transmission had been used, one such disc would be associated with each gear and there would then only need to be one set of brake calipers on each disc in order to achieve the same two functions.

In normal use of the escalator, with the main motor 11 driving the step-band 15 continuously through the reduction gearing 12, the electromagnetic clutch 18 is programmed so as automatically to "spin free" and the auxiliary motor 21 therefore is not drivingly connected to the main motor shaft 23.  When the main motor 11 is not being drivingly operated, and the auxiliary motor 21 has to be used, the clutch 18 can be electrically engaged so that when the auxiliary driving motor 21 is started its drive will be transmitted through the main motor shaft 23 to the reduction gearing 12 and hence to the step-band 15.

During that operation, the main motor shaft 23 acts solely as a layshaft to transmit the gear drive from the auxiliary motor 21: the main motor 11 itself remains unenergised.

Electrical plug-in sockets 26, 27 are located one (26) at the head and one (27) at the foot of the escalator stairway, as shown in Figures 1 and 3. These sockets are immediately accessible from above the escalator. Hand-held pendant-type push-button units 28 (Figure 3A) complete with a plug assembly 29 on a flexible lead 31 are provided and can be made available within the station manager's office or other authorised place. When one of these units 28 is connected to the socket at the head (26) or the foot (27) of the stairway, the drive of the escalator step-band 15 by the auxiliary motor 21 is within the full control of the person holding the pendant control unit 28. He can stand either at the head or at the foot of the stairway, and "inch" the step-band 15 either up or down according to requirements.

In whichever position he stands, he can see the full length of the step-band 15 and he needs only to be able to operate a cimple push-button control such as 28 without having to be a qualified and experienced engineer.

Once the auxiliary motor drive 21 is no longer needed, and the main motor drive 11, 12 can be brought back into operation, it is only necessary to disengage electrically the electromagnetic clutch 18 which effectively cuts the auxiliary motor 21 out of the drive line.

Although the drawings illustrate an arrangement in which the drive motors and transmission are all

0012498

housed within the head truss of the escalator, the invention in its broadest aspect is equally applicable to escalators in which the drive motors and reduction gearing are situated in their traditional positions in a machine room excavated beneath the escalator head.

CLAIMS:-

1. An escalator drive comprising a main driving motor operable, in normal use of the escalator, to drive the step-band of the escalator continuously through reduction gearing, characterised by the provision of an auxiliary motor (21) which can be operated to advance the step-band (15) in a series of non-continuous movements when the main motor (11) is inoperative, and in that said motor (21) has a power supply independent of the main motor (11) power supply.

2. An escalator drive according to claim 1, characterised by the provision of means (18) which, when the main motor (11) drives the step-band (15) normally, either automatically uncouples the drive (19, 23, 12) from the auxiliary motor (21) to the step-band (15), or automatically cuts out the power supply to the auxiliary motor (21).

3. An escalator drive according to claim 2, characterised in that the said means (18) comprises a clutch which is interposed between the auxiliary motor (21) and its drive line (12) and which automatically disengages the auxiliary motor (21) from the drive line (12) whenever the main motor (11) is operative.

4. An escalator drive according to any of claims 1 to 3, characterised in that the auxiliary motor (21) drives the step-band (15) through the same reduction gearing (12) as that through which the main motor (11) drives the step-band (15).

5. An escalator drive according to claim 4, characterised in that the output shaft of the main motor (11) protrudes from two opposite ends of the main motor housing; in that one protruding end of that shaft is coupled to the reduction gearing (12) which drives the step-band (15); _and in that_ the other protruding end (23) of the main motor output shaft drives the clutch means (18) to which the auxiliary motor (21) is coupled.

6. An escalator drive according to claim 5, _characterised in that_ the main motor (11), the auxiliary motor (21) and the reduction gearing (12) are all situated within the head truss of the escalator.

7. An escalator drive according to any of the preceding claims, _characterised in that_ one or more electrical sockets (26,27) is located at the head and/or the foot of the escalator stairway, so that the power supply to the auxiliary motor (21) can be controlled by a box (28) adapted to be detachably plugged into said socket or sockets (26, 27).

8. An escalator drive substantially as described with reference to, and as illustrated in, the accompanying drawings.

FIG. 1

1/4

0012498

FIG. 2

FIG. 3

FIG. 3A

**European Patent Office**

**EUROPEAN SEARCH REPORT**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | B 66 B 9/12 |
| | US - A - 2 949 178 (A. FABULA)<br>* Column 1, line 1 - column 4, line 70; figures 1-4 *<br><br>-- | 1-5,7 | |
| | FR - A - 1 465 469 (J.F. BOUDES)<br>* Whole patent *<br><br>-- | 1-3 | |
| | US - A - 3 144 917 (L.E. TRESSEL)<br>* Column 3, line 35 - column 4, line 4; figures 2,3 *<br><br>-- | 3 | **TECHNICAL FIELDS SEARCHED (Int.Cl. 3)**<br><br>B 66 B 9/12<br>5/02 |
| A | AT - B - 295 795 (F. MACHER)<br>* Whole patent *<br><br>---- | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-12-1979 | ZAEGEL |

EPO Form 1503.1   06.78